# EUROPEAN PATENT SPECIFICATION

(11) **EP 0 996 209 B1**
(45) Date of publication and mention of the grant of the patent: **18.01.2006**
(21) Application number: 99119761.7
(22) Date of filing: 06.10.1999
(51) Int. Cl.: H02G 7/05, G02B 6/44

(54) **A bolt type clamp for anchoring an overhead electric line cable**
Bolzen-Klemme zur Verankerung von einem elektrischen Freileitungskabel
Pince d'ancrage à boulons pour câble de ligne électrique aérienne

(30) Priority: 19.10.1998 IT MI982233
(43) Date of publication of application: 26.04.2000
(73) Proprietor: OFFICINA FRATELLI BERTOLOTTI S.p.A., 10088 Volpiano (TO) (IT)
(72) Inventor: Perrone, Giovanni, 20125 Milano (IT)
(74) Representative: Ferraiolo, Rossana

(56) References cited:
- EP-A- 0 255 030
- EP-A- 0 579 543
- EP-A- 0 809 340

## Description

The present invention concerns a bolt type clamp for anchoring an overhead electric line cable, more especially a clamp for anchoring to a support for an overhead electric line a cable formed by single energy conductors each lined with an insulating sleeve and all together helically twisted around a strand made of steel wires. Such strand has load bearing functions and comprises optical fibres inside it for signal transmission purposes.

In the description hereafter the above said cable formed by lined single energy conductors twisted around a strand will simply be called - electric cable with optical fibres -. The lined energy conductors will simply be called - energy conductors - .The strand will simply be called - steel strand -.

In the present description, the word - support - is used to define a tower or another structure to which the electric cable with optical fibres may be anchored.

Document EP-A 0 255 030 is known that concerns a clamp for retaining cables or conductors of overhead electric lines particularly for cables or conductors incorporating optical fibres. This clamp is adapted both for suspension or anchorage of cables or conductors to a pole of electric line or for connecting vibration dampers or spacers to the clables or conductors. The scope of the invented clamp is to realize a general type clamping device of improved structure to allow its use also for conductors incorporating optical fibres, the improvement consisting substantially in a precise machining of the clamp grooves and in defining certain values of dimensions and angles of specific parts of the clamp.

Cables for electric distribution lines are known that are generally formed by single copper conductors, each protected by an insulating sleeve of a suitable plastic material, twisted around a steel cable not bearing optical fibres.

The anchoring of such cables does not give rise to any problem with the use of the well known bolt type clamps clamped onto an uninterrupted steel cable, or cut in the region where it is anchored, but these known clamps cannot beused for achoring an eletric cable with optical fibres owing to the reasons illustrated hereinafter.

An electric cable with optical fibres must obviously be anchored by means of a clamp applied onto the steel strand and the latter may not be cut; the known bolt type clamps feature a length and curvature radius that are less than what would be required to anchor an electric cable with optical fibres without damaging the optical fibres, that is the breakage or compression of the same optical fibres with consequent loss of signal; during the anchoring procedure the energy conductors twisted around the steel strand get distanced from the same steel strand owing to the rather brutal action exerted by known extractors, but because the steel strand contains optical fibres, the length of steel strand that can conveniently be extracted without damaging the optical fibres is no longer than 40-70 cm. and the maximum distance between the steel strand and the energy conductors is no more than 10 cm.; a clamp longer than the known bolt type clamps, while on one hand it will exert less pressure, on the other hand cannot be fitted in the limited space left free by the extractors.

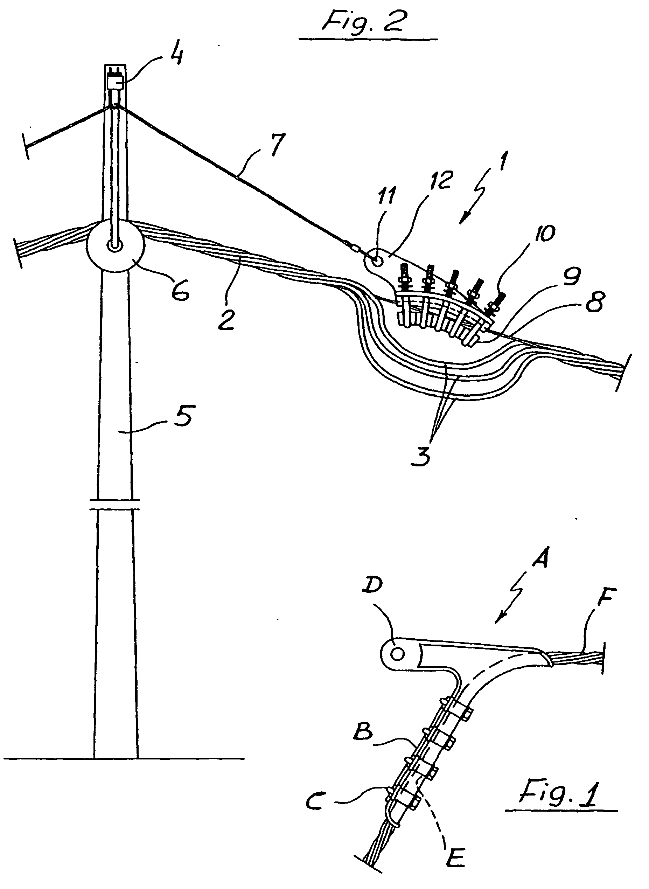

For a simpler description the shape into which the energy conductors have formed after having been distanced from the steel strand will be called - bundle of wires - (Fig. 2).

The present invention concerns a bolt type clamp for anchoring an electric cable, and more especially for anchoring an electric cable formed by energy conductors each protected by an insulating sleeve and all together twisted around a steel strand bearing optical fibres inside; the clamp comprises a clamp body wherein the means for anchoring the clamp to the support are set behind the concavity of the race in the clamp body so extending longitudinally that the steel strand, when hold pressed by fastening means, is subjected to a pressure that the optical fibres may withstand with no damage, in order that the clamp may be mounted opposite or external to the bundle of energy conductors that have been separated from the steel strand as in a conventional cable stringing procedure.

In the initial stages of stringing an electric cable with optical fibres, the steel strand must be supported and fixed adjacent to the support scrossarm and then said steel strand must be extracted from the energy conductors by means of known extractors. The clamp is then clamped to the straight-line part of the steel strand with the help of its keeper and clamping means, such as U-bolts or pairs of bolts, the steel strand is positioned and clamped within the opposite races defined respectively between the clamp body and the single keeper.

It is clear how, compared to the conventional bolt type clamps, the clamp invented is fitted to the steel strand in a portion thereof which has been made free of the energy conductors spread apart as a bundle of conductors, preferably with its anchoring means on the side opposite or well far away from said bundle of conductors so that the clamp race faces the steel strand from a position opposite or well far away said bundle with respect to the steel strand.

According to a preferred embodiment, the clamp race is bent with the curvature center facing the race concavity.

As an alternate to the conventional single-body , the present invention preferably comprises single keeper elements each of which is associated with its own clamping means; this solution is conveniently adopted in the case of bent clamp race. This solution allows to avoid the bending stress that takes place into the steel strand when the race is bent and a single long keepere with more than one fastening means as U bolts or bolts (simply termed - fastening means - herein) is used.

Electric cables with optical fibres can be mounted on the electric line between adjacent supports, clamped by the respective clamps under a low clamping strength, such as to allow the steel strand and the keeperes to slide along the clamp body once said electric cables are left from the stringing equipment to charge the opposite clamps of a span between two supports; in these conditions the angle of the fastening means increases and makes the clamping pressure on the electric cable with optical fibres increase to a value of equilibrium with the conductor pulling. To limit the sliding of the steel cable in the race of the clamp body means are provided on the clamp by which the fastening means are set, at the beginning of the stringing operation, with a suitably small angle with respect the tangent to the race curvature, as illustrated in the examples herein.

The advantages of the invention are many:
- in the case of a clamp with a bent race, the curvature radius can be chosen wide enough to avoid that the steel strand is subjected to such a deformation as to damage the optical fibers in the steel strand;
- the break down of the keeper into single keeper elements, each one being shortly extended longitudinally, makes easier the assembly in the limited space left by the extractors;
- the distribution of the single keeper elements along the whole clamp extension allows to use the entire clamp length, as to the clamping effect is concerned, with no length portion left unused;
- the small sliding movements that the single keeper elements make with respect to the clamp body along the steel strand and the consequent rotation of the fastening means allow to increase the pressure of the keeper on the same cable without having to initially over tighten the fastening means.

The invention will be described in further detail through an example of embodiment and the help of drawings in which
Fig. 1 is a side view of a conventional clamp;
Fig. 2 is a first side view according to the present invention;
Fig. 3 is a second side view;
Fig. 4 is a third side view,
Fig. 5 is a cross-section according to A-A in Fig. 3;
Fig. 6 is a first side part view; and
Fig. 7 is a second side part view.

Fig. 1 shows a conventional bolt type clamp A with a single body keeper B fastened by fastening means in the form of U-bolts C. The figure shows that the anchoring means D to a support that is not shown is on the same side of the concave race E in the clamp; the clamp clamps a conductor F.

Figure 2 shows a bent race clamp 1 in the initial stage of stringing an electric cable with optical fibres. Said cable 2 is held by a pulley 6 suspended at the end of a cross arm 4 of an anchoring support 5, the cable being blocked in said position and hence treated with the known technique to spread apart the three energy conductors as a bundle 3 from a portion of the steel strand 8. The figure shows how said clamp 1 is anchored to cross arm 4 of the anchoring support 5 by means of a steel rope 7 that has one end fixed to cross arm 4 and the other end engaged into ring 11 in the anchoring means 12 that is on the side opposite the concavity of the clamp race, the clamp body being mounted on the free portion of the steel strand 8 in a position opposite the bundle of conductors 3. By means of the five keepers 9 and related fastening U-bolts 10, the steel strand is first pushed and then pressed into the race of the clamp 1.

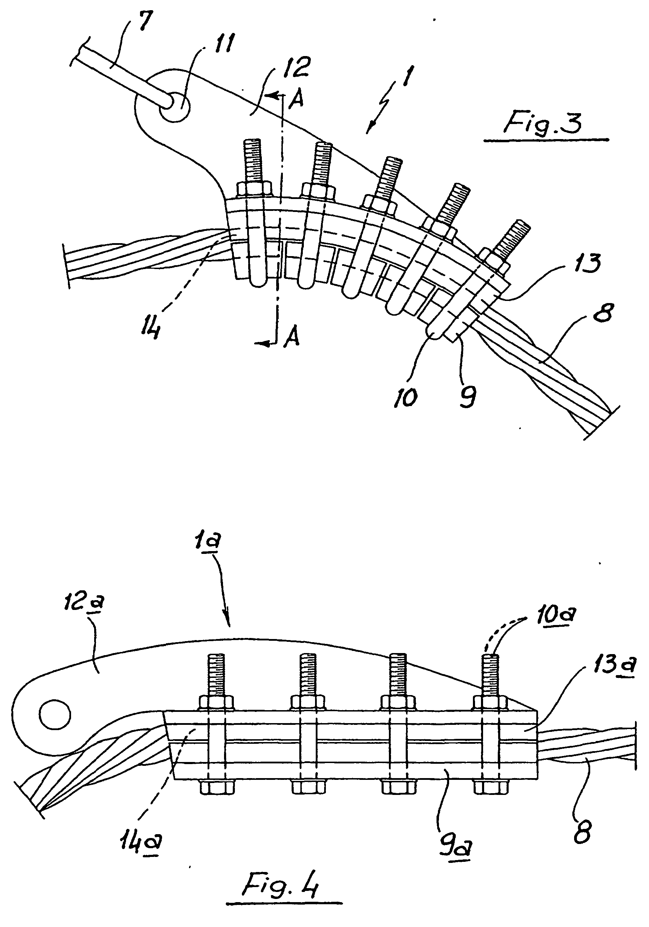

Figure 3 shows a clamp 1 with a bent race 14 in which the clamp body 13 that bears the anchoring means 12 with its ring 11 is opposite the race 14 and the keeper means is divided into five keeper elements 9 positioned beneath the steel strand 8, each fastened by means of a U-bolt 10; 7 indicates the part of the steel rope that connects the clamp to the cross arm of the support not shown.

Fig. 4 shows a type of clamp la with a straight line race14a in which the clamp body 13a bears the anchoring means 12a opposite the concavity of the straight line race 14a and a single keeper 9a pressing the steel strand 8 into the race 14a by means of four pairs of fastening bolts 10a.

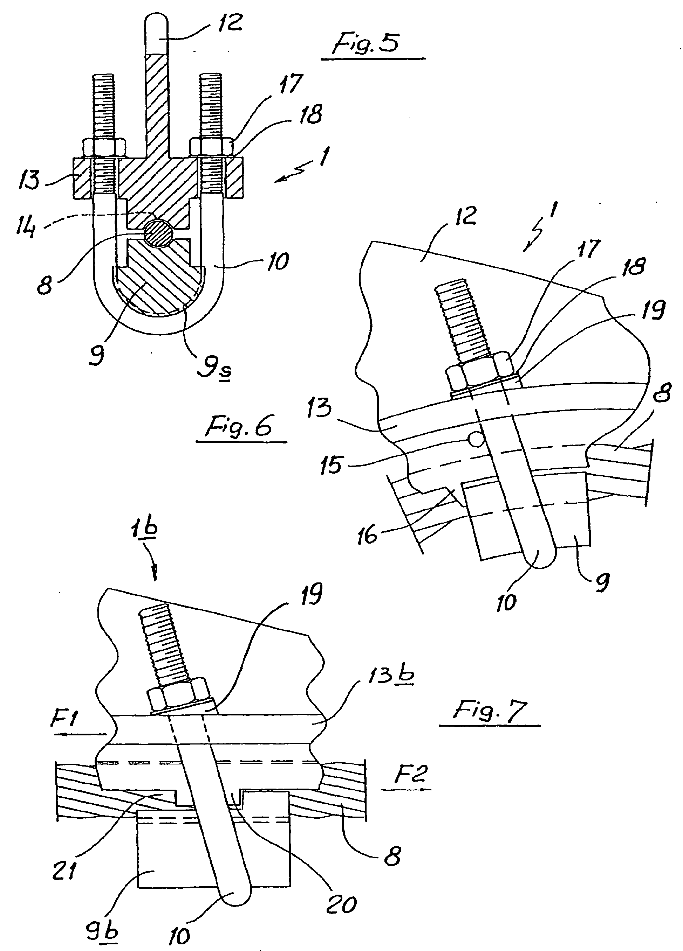

Fig. 5 shows a cross section of clamp 1 and a U-bolt 10 fitted to press the keeper 9 in order to clamp the steel strand 8 in the race 14 of the clamp body 13. The bent part of the U-bolt is engaged into a seat 9s in the lower part of the keeper. Each of the two nuts 17 of U-bolt 10 is tightened onto a washer 18. The rib 12 is the previously mentioned anchoring means.

Fig. 6 shows an embodiment of a clamp 1 in which each U-bolt 10 leans against a means that sets its position (such a leaning is of a 5° angle with respect to the direction the U-bolts have in the embodiment of Fig. 3); said means is a projection 15 (or 16) symmetrically formed on both sides of the body of the clamp (the figure shows projections on one side only). These projections are such as to ensure that the position taken on by the keeper 9 and hence by the U-bolt 10 is such as to reduce the sliding of the steel strand 8 in the race of the clamp body once the steel strand bears upon the opposite clamps of the two adjacent supports; the steel strand 8 and the keeper 9 slide with respect to the clamp body 13 and the fastening U-bolt is dragged by said sliding to an angle owing to the fact that its bent part is engaged into the groove (9s in Fig. 5) formed under the keeper 9. The angle of the U-bolt increases the clamping pressure until the pull exerted by the steel strand 8 is balanced out.

Fig. 7 shows a clamp 1b in which the means for setting the initial position of keeper 9b and 10 are provided on the body of the clamp 13b and on the keeper 9b itself; both sides of the the clamp body are symmetrically fitted with extensions 20 (only one is shown in the figure) suited to slide into the corresponding apertures 21 on the two sides of the rim of the keeper 9b in order to perform the same function as the projections 15 and 16 described in Fig. 6. The arrows F1 and F2 indicate the forces that make the steel strand 8 and the keeper 9b slide with respect to the clamp body 13b. On the upper part of the clamp body a slanted projection 19 has been shaped for the washer and nut of the leaned U-bolt 10. It is clear that an alternate solution for the above mentioned means for setting the initial position of 9b and 10 is that extensions 20 are shaped into the rim of the keeper 9b and apertures 21 are shaped into the clamp body 13b.

## Claims

1. Bolt type clamp (1) for anchoring to a support (5) an overhead electric line cable (2) consisting of single energy conductors (3) each lined with an insulating sleeve and all together helically twisted around a steel strand (8) comprising optical fibres inside, where the clamp (13) comprises a body in which there are featured a race (14) for the steel strand, anchoring means (11, 12) for anchoring the clamp to said support and fastening means (9, 10) to hold the steel strand (8) pressed within the race (14) **characterized in that** the anchoring means (11, 12) are positionad behind the concavity of the race (14) longitudinally bent with the centre of curvature facing its own concavity and the clamp holds the steel strand (8) in a position that is opposite or external to the bundle of energy conductors (3) on stringing stage.

2. Clamp according to claim 1 **characterized in that** the fastening means (9, 10) of the steel strand (8) in the race (14) are a number of keeper elements (9) each associated with at least one fastening bolt (10, 10a) set inclined in clamp setting means (15, 16,20/21) that limit the sliding of the steel strand (8) in the race (14).

3. Clamp according to claim 2 **characterized in that** said setting means are projections (15, 16) in the body of the clamp.

4. Clamp according to claim 3 **characterized in that** said setting means include extensions (20) in the body of the clamp (13) or else in the rim of the fastening means (9), which extensions extend and slide into corresponding apertures (21) provided , respectively, in the rim of the fastening means (9) or else in the body of the clamp (13).

## Patentansprüche

1. Schraubenklemme (1) zum Verankern eines elektrischen Freileitungskabels (2) an einer Halterung (5), wobei das Kabel aus einzelnen Energieleitern besteht, von denen jeder mit einer isolierenden Umhüllung ummantelt ist und alle zusammen schraubenförmig um eine Stahlseele (8), die in ihrem Inneren optische Fasern enthält, verdrillt sind, wobei die Klemme (13) einen Körper aufweist, an dem eine Spurrille (14) für die Stahlseele, Verankerungsmittel (11, 12) zum Verankern der Klemme an der Halterung und Befestigungsmittel (9, 10) zum Pressen der Stahlseele (8) innerhalb der Spurrille (14) vorgesehen sind, **dadurch gekennzeichnet, dass** die Verankerungsmittel (11, 12) hinter der Konkavität der Spurrille (14) angeordnet sind, die in Längsrichtung gekrümmt ist, wobei das Krümmungszentrum ihrer eigenen Konkavität zugewendet ist, und dass die Klemme die Stahlseele (8) in einer Position hält, die gegenüber oder außerhalb des Bündels von Energieleitern (3) in der Aufspannphase liegt.

2. Klemme nach Anspruch 1, **dadurch gekennzeichnet, dass** die Befestigungsmittel (9, 10) der Stahlseele (8) in der Spurrille (14) aus einer Anzahl von Klemmteilen (9) bestehen, denen mindestens eine Befestigungsschraube (10, 10a) zugeordnet ist, die geneigt in Klemmeneinstellmitteln (15, 16,20/21) eingesetzt sind, welche die Verschiebung der Stahlseele (8) in der Spurrille (14) begrenzen.

3. Klemme nach Anspruch 2, **dadurch gekennzeichnet, dass** die Einstellmittel Vorsprünge (15, 16) an dem Körper der Klemme sind.

4. Klemme nach Anspruch 3, **dadurch gekennzeichnet, dass** die Einstellmittel Verlängerungen (20) an dem Körper der Klemme (13) oder am Rand der Befestigungsmittel (9) aufweisen, wobei die Vorsprünge sich in entsprechende Öffnungen (21) hineinerstrecken und verschieben, die jeweils im Rand der Befestigungsmittel (9) oder aber in dem Körper der Klemme (13) vorgesehen sind.

## Revendications

1. Pince de type à boulons (1) pour l'ancrage à un support (5) d'un câble de ligne électrique aérienne (2) constitué de monoconducteurs d'énergie (3) revêtus chacun d'une gaine isolante et torsadés tous ensemble en hélice autour d'un toron d'acier (8) incluant des fibres optiques, la pince (13) comprenant un corps dans lequel on forme un chemin de guidage (14) du toron d'acier, des moyens d'ancrage (11, 12) de la pince au support, et des moyens de fixation (9, 10) pour maintenir le toron d'acier (8) pressé à l'intérieur du chemin de guidage (14),
**caractérisée en ce que**
les moyens d'ancrage (11, 12) sont positionnés derrière la concavité du chemin de guidage (14) courbé longitudinalement de façon que le centre de courbure soit en face de sa propre concavité, et
la pince maintient le toron d'acier (8) dans une position opposée ou extérieure par rapport au faisceau de conducteurs (3) au stade de montage.

2. Pince selon la revendication 1,
**caractérisée en ce que**
les moyens de fixation (9, 10) du toron d'acier (8) dans le chemin de guidage (14) consistent en un certain nombre d'éléments de maintien (9) associés chacun à au moins un boulon de fixation (10, 10a) réglé en position inclinée dans des moyens de mise en place de pince (15, 16, 20/21) qui limitent le glissement du toron d'acier (8) dans le chemin de guidage (14).

3. Pince selon la revendication 2,
**caractérisée en ce que**
les moyens de mise en place sont des saillies (15, 16) du corps de la pince.

4. Pince selon la revendication 3,
**caractérisée en ce que**
les moyens de mise en place comprennent des prolongements (20) dans le corps de la pince (13) ou bien encore dans le bord des moyens de fixation (9), ces prolongements s'étendant et glissant dans des ouvertures correspondantes (21) prévues respectivement dans le bord des moyens de fixation (9) ou bien encore dans le corps de la pince (13).
